# FASCICULE DE BREVET EUROPEEN

(11) **EP 1 616 256 B1**
(45) Date de publication et mention de la délivrance du brevet: **04.07.2007**
(21) Numéro de dépôt: 04725394.3
(22) Date de dépôt: 02.04.2004
(51) Int. Cl.: G06F 9/445, G07F 7/10

(54) **PROCÉDÉ DE GESTION D'UN CODE EXECUTABLE TÉLÉCHARGÉ DANS UN SYSTÈME EMBARQUÉ REPROGRAMMABLE**
VERFAHREN ZUM VERWALTEN EINES IN EINEM UMPROGRAMMIERBAREN ONBOARD-SYSTEM HERUNTERGELADENEN AUSFÜHRBAREN CODES
METHOD FOR MANAGING AN EXECUTABLE CODE DOWNLOADED IN A REPROGRAMMABLE ON-BOARD SYSTEM

(30) Priorité: 14.04.2003 FR 0304628
(43) Date de publication de la demande: 18.01.2006
(73) Titulaire: GEMPLUS, 13420 Gémenos (FR)
(72) Inventeur: BENOIT, Alexandre, 13010 Marseille (FR); ROUSSEAU, Ludovic, 13400 Aubagne (FR)
(86) Numéro de dépôt international: PCT/EP2004/050437
(87) Numéro de publication internationale: WO 2004/090718

(56) Documents cités:
- FR-A- 2 797 963
- US-A- 6 005 942
- US-A1- 2002 002 703
- SUN MICROSYSTEMS: "JAVA CARD 2.1 VIRTUAL MACHINE SPECIFICATION" 1999, JAVA CARD 2.1 VIRTUAL MACHINE SPECIFICATION, XX, XX, PAGE(S) COMPLETE , XP002146390 alinéa [01.1] - alinéa [01.4] alinéa [03.1] - alinéa [3.10.1]
- LEROY X: "On-Card Bytecode Verification for Java Card" 2001, LECTURE NOTES IN COMPUTER SCIENCE, SPRINGER VERLAG, NEW YORK, NY, US, VOL. 2140, PAGE(S) 150-164 , XP002208586 ISSN: 0302-9743 le document en entier
- CASSET L ET AL: "Formal development of an embedded verifier for java card byte code" PROCEEDINGS INTERNATIONAL CONFERENCE ON DEPENDABLE SYSTEMS AND NETWORKS. DSN 2002. WASHINGTON, D.C., JUNE 23 - 26, 2002, INTERNATIONAL CONFERENCE ON DEPENDABLE SYSTEMS AND NETWORKS, LOS ALAMITOS, CA, IEEE COMP. SOC, US, 23 juin 2002 (2002-06-23), pages 51-56, XP010600283 ISBN: 0-7695-1597-5

## Description

L'invention concerne un procédé de gestion d'un code exécutable prévu pour être téléchargé, notamment dans un système informatique embarqué à microprocesseur.

D'une manière générale, la présente invention s'applique à tout système embarqué, reprogrammable par téléchargement d'un programme constitué par un code exécutable, se présentant sous la forme d'une suite d'instructions exécutables par le microprocesseur du système embarqué. L'invention trouve une application particulièrement intéressante dans un contexte où le code exécutable est constitué par un code objet intermédiaire, exécutable par le microprocesseur du système embarqué par l'intermédiaire d'un interpréteur du code intermédiaire, communément appelé machine virtuelle, muni d'une pile d'exécution et de registres d'opérandes manipulés par ces instructions et permettant d'interpréter ce code intermédiaire.

Plus particulièrement, la description qui va suivre concerne l'application de l'invention dans le contexte des cartes à microprocesseurs reprogrammables de type JavaCard.

Les cartes à microprocesseur de type JavaCard sont en effet reprogrammables par l'intermédiaire d'une opération de téléchargement d'un petit programme, désigné par « appliquette » ou « applet » selon la terminologie anglo-saxonne.

Pour des raisons de portabilité entre différents systèmes informatiques embarqués, un applet se présente sous forme de code pour une machine virtuelle standard. Ce code écrit sous forme binaire sert d'intermédiaire entre le code source et le code binaire exécutable et est obtenu par exemple par la mise en oeuvre d'un compilateur Java. Ce code intermédiaire, « bytecode » selon la terminologie anglo-saxonne, n'est donc pas directement exécutable par le microprocesseur de la carte mais doit être interprété de manière logicielle par un interpréteur de code binaire appelé machine virtuelle. Il suffit que la carte dans laquelle doit s'exécuter l'applet écrit en langage intermédiaire soit munie d'un minimum de ressources informatiques spécifiques formant le programme constitutif de la machine virtuelle. Dans l'exemple précité des cartes de type JavaCard, la machine virtuelle utilisée est un sous-ensemble de la machine virtuelle Java.

L'opération de téléchargement d'applets sur un système informatique embarqué doté d'un interpréteur de code intermédiaire pose un certain nombre de problèmes de sécurité. Ainsi, un applet involontairement mal écrit peut modifier de manière incorrecte des données déjà présentes sur le système, empêcher le programme principal de s'exécuter correctement, ou encore modifier d'autres applets téléchargés précédemment, en rendant ceux-ci inutilisables ou nuisibles.

Egalement, à partir d'un applet écrit dans un but malveillant, il est possible d'effectuer une opération de duplication de zones de mémoire de la carte et/ou de mettre en péril le bon fonctionnement de la carte à puce. Il devient ainsi possible d'avoir accès à des données confidentielles ou non autorisées stockées dans le système, telles que le code d'accès dans le cas d'une carte bancaire par exemple, ou d'attaquer l'intégrité d'une ou plusieurs applications présentes sur la carte. Enfin, si la carte est connectée au monde extérieur, les dysfonctionnements provoqués peuvent se propager à l'extérieur de la carte.

Aussi, des solutions ont été proposées de manière à remédier aux problèmes de sécurité impliqués par l'opération de téléchargement de code intermédiaire (bytecode) sur un système informatique embarqué doté d'un interpréteur de code intermédiaire, tel que l'exemple précité de la JavaCard.

Une solution consiste à effectuer des contrôles dynamiques d'accès et de typage pendant l'exécution des applets. La machine virtuelle effectue alors un certain nombre de contrôles lors de l'exécution des applets, tels que :

Contrôle d'accès à la mémoire : à chaque lecture ou écriture d'une zone mémoire, la machine virtuelle vérifie le droit d'accès de l'applet aux données correspondantes ;

Vérification dynamique des types de données : à chaque instruction de l'applet, la machine virtuelle vérifie que les contraintes sur les types de données sont satisfaites ;

Détection des débordements de pile et des accès illégaux dans la pile d'exécution de la machine virtuelle.

Cette solution présente toutefois l'inconvénient d'un ralentissement très important de l'exécution, provoqué par l'ensemble des vérifications dynamiques. De telles vérifications augmentent également les besoins en mémoire vive et permanente du système, en raison des informations supplémentaires de type qu'il est nécessaire d'associer aux données manipulées.

Une autre solution consiste alors à spécifier le code intermédiaire (bytecode) de telle sorte qu'il soit possible de contrôler de manière statique (c'est-à-dire pendant l'opération de téléchargement et avant son exécution) que le programme est inoffensif. Ceci est réalisé par un organe de sécurité appelé vérifieur. Pour des raisons de sécurité, les cartes JavaCard doivent donc posséder un vérifieur à bord.

Bien qu'il permette une exécution du code intermédiaire beaucoup plus rapide par rapport au processus de vérification dynamique, un tel processus de vérification statique présente toutefois l'inconvénient d'être coûteux, tant en taille de code nécessaire pour conduire ce processus, qu'en taille de mémoire vive nécessaire pour contenir les résultats intermédiaires de la vérification, et qu'en temps de calcul.

En partant du principe énoncé dans cette dernière solution, la demande de brevet FR 2 797 963 (D1) présente un protocole de gestion d'un code intermédiaire téléchargé associé à un processus de vérification statique de ce code intermédiaire lors de son téléchargement, qui permet une exécution sure de ce dernier par le système informatique embarqué. On obtient ainsi avantageusement un vérifieur beaucoup plus simple et beaucoup moins coûteux en taille de code nécessaire.

L'idée centrale de D1 est de transformer le code intermédiaire hors carte avant son téléchargement pour en simplifier la vérification une fois qu'il a été téléchargé et mémorisé dans la carte. Une phase de transformation du code intermédiaire est donc réalisée hors de la carte et il s'agit par conséquent d'un code intermédiaire modifié et normalisé qui est téléchargé dans la carte, plutôt que le code intermédiaire original obtenu par la mise en oeuvre d'un compilateur Java. Ainsi, le code intermédiaire transformé hors carte sera plus facilement vérifié en mode statique selon un processus de vérification prédéfini puisqu'il aura été transformé en un code intermédiaire normalisé satisfaisant a priori aux critères de vérification du processus de vérification prédéfini objet de D1. Cette phase préalable de transformation effectuée hors carte permet donc avantageusement d'accélérer le processus de vérification. Pour une description détaillée de cette solution, on pourra se reporter au texte de D1.

Toutefois, un inconvénient de la méthode proposée dans D1 est qu'elle ne permet pas de faire cohabiter le processus de vérification du code intermédiaire sur laquelle elle repose avec un système de signature de ce code intermédiaire. Ainsi, D1 ne permet pas d'avoir un code intermédiaire d'une part, vérifiable de façon simple et rapide et, d'autre part, signé. En effet, la méthode proposée par D1 prévoit de transformer le code intermédiaire hors carte avant son téléchargement comme expliqué plus haut et, par conséquent, la signature du développeur du code (ou de toute autre personne habilitée à signer le code) effectuée avant la transformation imposée hors carte au code intermédiaire devient, du fait même de cette modification, invalide. Il en résulte que la signature n'est alors plus vérifiable par la carte.

Or, la possibilité laissée à la carte de pouvoir vérifier la signature du code intermédiaire téléchargé est également très importante en terme de sécurité. En effet, la vérification préalable du code intermédiaire avant son exécution ne permet pas de s'assurer que le code intermédiaire ne contient pas de « cheval de Troie ». En fait, seule une analyse manuelle permet de contrôler que le code intermédiaire, même s'il est correct vis-à-vis de la vérification, n'est pas agressif et ce contrôle ne peut pas être réalisé par la carte. Plus précisément, la carte ne peut en fait que vérifier la validité d'une signature attestant que ce contrôle manuel du code intermédiaire a été effectué correctement. D'où l'importance de pouvoir mettre en oeuvre le téléchargement d'un code intermédiaire disposant d'une signature valide.

Dans le domaine des systèmes informatiques embarqués, on connaît un autre document US 6005942 qui décrit un système et un procédé permettant de télécharger de façon sécurisée un code déjà installé dans une carte à microprocesseur, ledit code possédant une signature cryptographique et étant exécutable par le microprocesseur après vérification par celui-ci de la validité de ladite signature.

La présente invention, qui se fonde sur ces différents constats, a pour but de pallier les inconvénients précités liés à la mise en oeuvre du procédé de vérification objet de D1.

Avec cet objectif en vue, l'invention vise plus particulièrement à faire cohabiter un système de signature avec le système de vérification proposé par D1 lors du téléchargement d'un code intermédiaire dans un système informatique embarqué reprogrammable doté d'un interpréteur de code intermédiaire, sans toutefois renoncer aux avantages procurés par le système de vérification selon D1, notamment en termes de simplicité et de rapidité.

Plus généralement, un objet de l'invention est la mise en oeuvre d'un procédé de gestion d'un code exécutable à télécharger, intermédiaire ou non, permettant la vérification d'une signature de ce code par un système informatique embarqué tel qu'une carte à microprocesseur, tout en laissant l'opportunité d'opérer une transformation du code exécutable en vue d'une utilisation spécifique prédéfinie. Par exemple, la transformation du code exécutable original peut vouloir viser à améliorer sa vérification lors de son téléchargement selon les principes du processus de vérification exposés dans D1, lorsqu'il s'agit d'un code intermédiaire exécuté par l'intermédiaire d'une machine virtuelle, ou bien encore à améliorer sa vitesse d'exécution par le microprocesseur de la carte, sans qu'une telle transformation puisse altérer la validité de la signature et donc sa vérification par la carte.

A cet effet, l'invention concerne donc un procédé de gestion d'un code exécutable original formant un programme destiné à être téléchargé dans un système informatique embarqué reprogrammable tel qu'une carte à microprocesseur, ledit code possédant une signature cryptographique et étant exécutable par le microprocesseur du système embarqué après vérification par celui-ci de la validité de ladite signature, ledit procédé comprenant les étapes consistant au moins :
- hors carte : - à identifier un code exécutable modifié correspondant au code original, adapté à une utilisation spécifique prédéfinie; - à partir des variations entre les données du code original et du code modifié correspondant, à calculer un composant logiciel qui, lorsqu'il est appliqué au code original, permet de reconstruire le code modifié; et - à signer ledit composant logiciel;
- à télécharger le code original signé et le composant logiciel signé dans la carte;
- sur carte : - à vérifier les signatures respectivement du code original et du composant logiciel; - à appliquer le composant logiciel sur le code original de façon à reconstruire le code modifié pour son exécution par le microprocesseur.

Dans une variante, le code exécutable original est constitué par un code intermédiaire, exécutable par le microprocesseur de système embarqué par l'intermédiaire d'une machine virtuelle permettant d'interpréter ce code intermédiaire.

Selon un premier mode de réalisation, en liaison avec ladite variante, la machine virtuelle est munie d'une pile d'exécution et le composant logiciel téléchargé, appliqué sur carte au code intermédiaire original, permet de reconstruire un code intermédiaire modifié satisfaisant a priori à des critères de vérification dudit code intermédiaire selon lesquels les opérandes de chaque instruction dudit code appartiennent aux types de données manipulées par cette instruction et, à chaque instruction de cible de branchement, la pile d'exécution de la machine virtuelle est vide.

De préférence, le code intermédiaire modifié obtenu par l'application du composant logiciel est vérifié, avant son exécution par le microprocesseur par l'intermédiaire de la machine virtuelle, selon un processus vérifiant que le code intermédiaire modifié satisfait aux critères de vérification.

Selon un autre mode de réalisation, le composant logiciel téléchargé, appliqué sur carte au code original, permet de reconstruire un code modifié tel que son exécution est plus rapide par rapport à celle du code original.

Selon un autre mode de réalisation, le composant logiciel téléchargé, appliqué sur carte au code original, permet de reconstruire un code modifié tel qu'il procure une optimisation en taille par rapport au code original.

D'autres caractéristiques et avantages de l'invention ressortiront plus clairement de la description qui est faite ci-après, à titre indicatif et nullement limitatif, en référence aux figures suivantes dans lesquelles :
- la figure 1 illustre de façon schématique les étapes du procédé réalisées hors carte ;
- la figure 2 illustre de façon schématique l'étape de téléchargement dans la carte du code intermédiaire original et du composant logiciel associé dédié à une utilisation spécifique prédéfinie, et
- la figure 3 illustre de façon schématique les étapes du procédé réalisées sur carte.

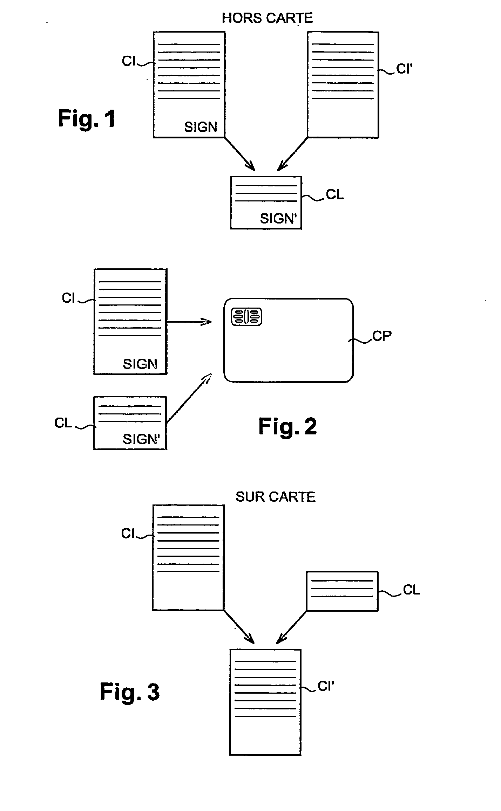

La description qui va suivre est plus particulièrement orientée vers une application de l'invention dans un contexte de système ouvert, et plus particulièrement celui des cartes à microprocesseurs reprogrammables de type JavaCard CP comme représentée à la figure 2, où le code original téléchargé est un code intermédiaire exécuté par le microprocesseur par l'intermédiaire d'une machine virtuelle. Toutefois, il ne doit pas être perdu de vue que le procédé selon l'invention s'applique également dans un contexte où le code téléchargé n'est pas un code intermédiaire mais un code directement exécutable par le microprocesseur du système embarqué.

De tels systèmes reprogrammables ajoutent donc la possibilité d'enrichir le programme exécutable après la mise en service du système par une opération de téléchargement d'un applet. L'applet devant être téléchargé se présente sous la forme d'un code exécutable original CI, constitué dans cet exemple par un code intermédiaire pour une machine virtuelle, typiquement un sous-ensemble de la machine virtuelle Java résidant dans la mémoire de la carte. Ainsi, une fois le code intermédiaire CI généré, un auditeur est mis à contribution pour vérifier que le code intermédiaire CI ne contient pas de cheval de Troie.

Dans le cas où le code intermédiaire CI ne contient effectivement aucun programme malicieux de ce type, l'auditeur signe le code intermédiaire CI. La signature cryptographique SIGN peut être effectuée en utilisant tout mécanisme de signature électronique à la disposition de l'homme de l'art. Le code intermédiaire CI signé est alors utilisable sur n'importe quelle carte Java et possède donc une signature SIGN attestant de son innocuité et susceptible d'être vérifiée par la carte au moment de son téléchargement. La vérification de la signature électronique consiste à vérifier que la signature est valide.

Une caractéristique essentielle de l'invention consiste à télécharger le code intermédiaire CI original, c'est-à-dire non modifié, dans la carte CP et de lui adjoindre un composant logiciel CL permettant, lorsqu'il est appliqué au code intermédiaire original, de calculer un code intermédiaire CI' modifié adapté à une utilisation spécifique prédéfinie. Sur les figures le code intermédiaire original CI est schématisé par des lignes de code en trait continu, tandis que le code intermédiaire modifié CI' correspondant est schématisé par des lignes de code en trait continu et en pointillés.

Selon l'invention, le logiciel CL supplémentaire à appliquer au code intermédiaire original signé CI est calculé hors carte en fonction du code intermédiaire original CI et d'un code intermédiaire modifié correspondant, identifié pour une utilisation spécifique prédéfinie. De la même façon que pour le code intermédiaire original CI, le composant logiciel CL est signé et possèdent donc une signature SIGN' susceptible d'être vérifiée.

L'application principale de l'invention est de pouvoir faire cohabiter un système de signature avec le système de vérification proposé par D1 lors du téléchargement du code intermédiaire dans la carte. Aussi, dans le cadre de cette application, le code intermédiaire CI' est un code intermédiaire modifié adapté à l'utilisation spécifique prédéfinie consistant à satisfaire a priori aux critères de vérification du processus de vérification objet de D1. Ainsi, dans l'application principale de l'invention, le composant logiciel est calculé de telle sorte qu'une fois appliqué au code intermédiaire original CI, on obtient un code intermédiaire modifié CI' qui est normalisé selon l'enseignement de D1 de façon à satisfaire a priori aux critères de vérification du processus de vérification objet de D1. Notamment, le code intermédiaire normalisé selon D1 est tel que les opérandes de chaque instruction appartiennent aux types de données manipulées par cette instruction et la pile d'exécution de la machine virtuelle est vide à chaque instruction de cible de branchement. Pour une description plus détaillée, le lecteur pourra utilement se reporter au texte de D1. Cependant, il sortirait du cadre de la présente demande de détailler ici les calculs permettant d'aboutir au composant logiciel tel que défini, qui sont par ailleurs connus de l'homme du métier.

Le code intermédiaire original CI et le composant logiciel CL associé sont alors téléchargés dans la carte CP, voir la figure 2. Le composant logiciel CL voyage donc avec le code intermédiaire original CI et est destiné à être appliqué sur carte au code intermédiaire original, une fois stocké avec ce dernier dans une mémoire permanente réinscriptible de la carte.

La carte vérifie tout d'abord que la signature SIGN du code intermédiaire CI est valide, de façon à s'assurer que ce dernier ne comprend pas de cheval de Troie ni aucun autre code malicieux du même type. La carte vérifie également la validité de la signature SIGN' du composant logiciel CL pour s'assurer que lui non plus ne contient pas de cheval de Troie.

Une fois ces opérations préalables de vérification de signature effectuées avec succès, la carte applique le composant logiciel CL au code intermédiaire original CI, voir la figure 3, de façon à reconstruire le code modifié CI' adapté à l'utilisation spécifique prédéfinie consistant, dans le mode de réalisation principal de l'invention, à satisfaire a priori aux critères de vérification du processus de vérification objet de D1.

La carte peut alors vérifier le code intermédiaire modifié avant son exécution par le microprocesseur par l'intermédiaire de la machine virtuelle en mettant en oeuvre les techniques de vérification employées dans le processus de vérification statique d'un fragment de programme objet de D1. Ainsi, le processus de vérification consiste à vérifier que le code intermédiaire modifié CI' satisfait aux critères de vérification précités, à savoir que les opérandes de chaque instruction du code modifié appartiennent aux types de données manipulées par cette instruction et, à chaque instruction de cible de branchement, la pile d'exécution de la machine virtuelle est vide. Il est demandé au lecteur de se rapporter au texte de D1 pour davantage de détails qui seraient superflus dans le cadre de la présente demande.

Puis, une fois la vérification du code intermédiaire modifié conduite selon les principes du vérifieur objet de D1, le code intermédiaire modifié est exécuté par le microprocesseur par l'intermédiaire de la machine virtuelle.

Ainsi, le procédé selon l'invention permet de faire cohabiter avantageusement un système de signature avec le système de vérification proposé par D1 lors du téléchargement d'un code intermédiaire dans un système informatique embarqué reprogrammable. Il est donc possible de télécharger des applets signés dans la carte et de permettre à la carte de vérifier cette signature tout en conduisant un processus de vérification tel qu'exposé dans D1. Ceci est rendu possible grâce au composant logiciel à télécharger en même temps que le code intermédiaire original signé, qui permet lorsqu'il est appliqué sur carte à ce dernier, d'obtenir un code intermédiaire modifié répondant aux principes du vérifieur simple et rapide exposé dans D1.

Le code intermédiaire téléchargé dans la carte selon l'invention étant le code intermédiaire original, sa signature n'est pas rendue invalide par un quelconque processus de modification effectué hors carte et, en conséquence, la carte est à même de vérifier sa signature avant son exécution.

Toutefois, si l'application principale qui a été présentée concerne un composant logiciel adapté à des fins de vérification du code intermédiaire selon les principes exposés dans D1, l'invention ne se limite nullement à une telle application.

De façon générale, l'invention s'applique au téléchargement dans un système embarqué reprogrammable d'un code exécutable original, intermédiaire ou non en fonction du système, et d'un composant logiciel associé tel que, lorsqu'il est appliqué sur carte au code original, le composant logiciel permet de reconstruire un code modifié adapté pour une utilisation spécifique prédéfinie. La finalité peut donc être autre que l'obtention d'un code modifié permettant l'application du processus de vérification selon D1.

Notamment, l'utilisation spécifique prédéfinie à laquelle répond le code modifié peut correspondre à une optimisation en temps de l'exécution du code. Ainsi, le composant logiciel téléchargé avec le code original peut être calculé de façon que le code original, une fois modifié sur carte par application du composant, s'exécute plus rapidement. Dans cette application de l'invention, le composant logiciel téléchargé appliqué sur carte au code original permet donc de reconstruire un code modifié tel que son exécution est plus rapide par rapport à celle du code original.

Egalement, le composant logiciel téléchargé avec le code original peut être calculé de façon que le code original, une fois modifié sur carte par application du composant, occupe une place mémoire moindre. Dans cette application de l'invention, le composant logiciel téléchargé, appliqué sur carte au code original, permet donc de reconstruire un code modifié tel qu'il procure une optimisation en taille par rapport au code original.

L'exemple donné ci-après à titre illustratif concerne un cas concret d'application sur carte d'un composant logiciel sur un code intermédiaire original en vue d'obtenir une optimisation en vitesse d'exécution et en taille du code original téléchargé. Dans cet exemple, le code intermédiaire original téléchargé décrit une opération courante effectuée dans les programmes de carte à puce consistant à récupérer l'octet de poids faible d'un mot de 16 bits placé sur la pile.

Soit donc le code intermédiaire original suivant (code opération Java et notation symbolique) :
*0x11 sspush 255*
*0x00*
*0xFF*
*0x53 sand ;*

Ce code permet de récupérer l'octet de poids faible d'un mot de 16 bits placé sur la pile. Pour cela, il faut empiler un mot de 16 bits dont l'octet de poids fort est à 0x00 et l'octet de poids faible est à 0xFF (sspush 255), puis faire un ET logique entre les deux mots de 16 bits sur la pile (sand).

Et, soit le code de remplacement correspondant :
*0xC9 Xsand*_*255 ;*

Dans cet exemple particulier, le composant logiciel téléchargé destiné à être appliqué sur carte au code intermédiaire original, a pour fonction de remplacer la suite d'instructions 0x11, 0x00, 0xFF, 0x53 par le code de remplacement 0xC9, pour obtenir ainsi un code intermédiaire modifié pour effectuer la même opération mais procurant un gain de 3 octets par rapport au code intermédiaire original et donc une optimisation en taille et en vitesse lors de son exécution par le microprocesseur par l'intermédiaire de la machine virtuelle.

## Revendications

1. Procédé de gestion d'un code exécutable original (CI) formant un programme destiné à être téléchargé dans une carte à microprocesseur (CP), ledit code possédant une signature cryptographique (SIGN) et étant exécutable par le microprocesseur après vérification par celui-ci de la validité de ladite signature, ledit procédé étant **caractérisé en ce qu'**il comprend les étapes suivantes consistant à :
- hors carte : - à identifier un code exécutable modifié (CI') correspondant au code original, adapté à une utilisation spécifique prédéfinie; et - à partir des variations entre les données du code original (CI) et du code modifié (CI') correspondant, à calculer un composant logiciel (CL) qui, lorsqu'il est appliqué au code original, permet de reconstruire le code modifié;
- à signer ledit composant logiciel (CL);
- à télécharger le code original signé et le composant logiciel signé dans la carte;
- sur carte : - à vérifier les signatures (SIGN, SIGN') respectivement du code original (CI) et du composant logiciel (CL); - à appliquer le composant logiciel (CL) sur le code original (CI), de façon à reconstruire le code modifié (CI') pour son exécution par le microprocesseur.

2. procédé selon la revendication 1, **caractérisé en ce que** le code exécutable original (CI) est constitué par un code intermédiaire, exécutable par le microprocesseur par l'intermédiaire d'une machine virtuelle permettant d'interpréter ce code intermédiaire.

3. Procédé selon la revendication 2, **caractérisé en ce que** la machine virtuelle est munie d'une pile d'exécution et **en ce que** le composant logiciel (CL) téléchargé, appliqué sur carte au code intermédiaire original (CI), permet de reconstruire un code intermédiaire modifié (CI') satisfaisant a priori à des critères de vérification dudit code intermédiaire selon lesquels les opérandes de chaque instruction dudit code appartiennent aux types de données manipulées par cette instruction et, à chaque instruction de cible de branchement, la pile d'exécution de la machine virtuelle est vide.

4. Procédé selon la revendication 3, **caractérisé en ce que** le code intermédiaire modifié (CI') obtenu par l'application du composant logiciel est vérifié, avant son exécution par le microprocesseur par l'intermédiaire de la machine virtuelle, selon un processus vérifiant que le code intermédiaire modifié (CI') satisfait aux critères de vérification.

## Claims

1. Method of managing original machine code (CI) forming a program designed to be downloaded onto a card with a microprocessor (CP), said code having a cryptographic signature (SIGN) and being executable by the microprocessor after verification by the latter of the validity of said signature, said method being **characterised in that** it comprises the following steps consisting of:
outside the card:
- identifying modified machine code (CI') corresponding to the original, adapted for a predefined specific use; and
- based on variations between the data of the original code (CI) and of the corresponding modified mode (CI'), calculating a software component (CL) which, when applied to the original code, makes it possible to reconstruct the modified code;
- signing said software component (CL);
- downloading the signed original code and the signed software component onto the card;
on the card:
- verifying the signatures (SIGN, SIGN') of the original code (CI) and the software component (CL) respectively;
- applying the software component (CL) to the original code (CI), so as to reconstruct the modified code (CI') with a view to the microprocessor running it.

2. Method according to claim 1, **characterised in that** the original machine code (CI) consists of bytecode which can be executed by the microprocessor by means of a virtual machine capable of interpreting this bytecode.

3. Method according to claim 2, **characterised in that** the virtual machine is equipped with an execution stack and **in that** the downloaded software component (CL), applied on the card to the original bytecode (CI), makes it possible to reconstruct modified bytecode (CI') initially fulfilling verification criteria of said bytecode according to which the operands of each instruction of said code belong to the types of data manipulated by this instruction and, at each branch target instruction, the execution stack of the virtual machine is empty.

4. Method according to claim 3, **characterised in that** the modified bytecode (CI') obtained by applying the software component is verified, prior to its execution by the microprocessor, by a process verifying that the modified bytecode (CI) fulfils the verification criteria.

## Patentansprüche

1. Verfahren zum Verwalten eines ausführbaren Originalcodes (CI), der ein Programm bildet, das dazu bestimmt ist, auf eine Mikroprozessorkarte (CP) geladen zu werden, wobei der besagte Code eine cryptographische Signatur (SIGN) besitzt und durch den Mikroprozessor ausführbar ist, nachdem dieser die Gültigkeit der besagten Signatur verifiziert hat, wobei das besagte Verfahren **dadurch gekennzeichnet ist, daß** es die folgenden Schritte umfaßt:
- Außerhalb der Karte: - einen veränderten ausführbaren Code (CI') zu identifizieren, der dem Originalcode entspricht, der an eine vorbestimmte spezifische Verwendung angepaßt ist; und - ausgehend von den Variationen zwischen den Daten des Originalcodes (CI) und des entsprechenden veränderten Codes (CI') eine Softwarekomponente (CL) zu berechnen, die, wenn sie auf den Originalcode angewandt wird, die Rekonstruktion des veränderten Codes ermöglicht;
- die besagte Softwarekomponente (CL) zu signieren;
- Den signierten Originalcode und die signierte Softwarekomponente auf die Karte zu laden;
- Auf der Karte: - die Signaturen (SIGN, SIGN') des Originalcodes (CI) beziehungsweise der Softwarekomponente (CL) zu verifizieren; - die Softwarekomponente (CL) auf den Originalcode (CI) anzuwenden, so daß der veränderte Code (CI') zur Ausführung durch den Mikroprozessor rekonstruiert wird.

2. Verfahren nach Anspruch 1, **dadurch gekennzeichnet, daß** der ausführbare Originalcode (CI) aus einem Zwischencode gebildet wird, der durch den Mikroprozessor vermittels einer virtuellen Maschine ausführbar ist, die diesen Zwischencode interpretieren kann.

3. Verfahren nach Anspruch 2, **dadurch gekennzeichnet, daß** die virtuelle Maschine mit einem Ausführungsstapel versehen ist, und **dadurch**, daß mit der ferngeladenen Softwarekomponente (CL), die in der Karte auf den originalen Zwischencode (CI) angewandt wird, ein veränderter Zwischencode (CI') rekonstruiert werden kann, der a priori die Verifizierungskriterien des besagten Zwischencodes erfüllt, nach denen die Datenteile jeder Anweisung des besagten Codes zu den Arten der von dieser Anweisung betroffenen Daten gehören, und bei jeder Zielanweisung zum Anschluß ist der Ausführungsstapel der virtuellen Maschine leer.

4. Verfahren nach Anspruch 3, **dadurch gekennzeichnet, daß** der durch die Anwendung der Softwarekomponente erzielte veränderte Zwischencode (CI') vor seiner Ausführung durch den Mikroprozessor vermittels der virtuellen Maschine nach einem Verfahren verifiziert wird, bei dem geprüft wird, daß der modifizierte Zwischencode (CI') die Verifizierungskriterien erfüllt.
